# EUROPEAN PATENT SPECIFICATION

(11) **EP 0 795 942 B1**
(45) Date of publication and mention of the grant of the patent: **09.08.2000**
(21) Application number: 97200731.4
(22) Date of filing: 11.03.1997
(51) Int. Cl.: H02G 1/00, F17D 1/04, H02G 1/08

(54) **Gas distribution network with information transmission cable**
Gasnetz mit einem Informationsübertragungskabel
Réseau de distribution du gaz avec câble de transmission de l'information

(30) Priority: 11.03.1996 EP 96200659
(43) Date of publication of application: 17.09.1997
(73) Proprietor: GASTEC N.V., NL-7327 AC Apeldoorn (NL); Centraal Overijsselse Nutsbedrijven N.V. ( COGAS), 7605 AT Almelo (NL); N.V. GAMOG Gasmaatschappij Gelderland, 7202 AH Zutphen (NL)
(72) Inventor: Top, Willem, Centraal Overijsselse Nutsbedr. N.V., 7605 AT Almelo (NL); Terpstra, Peter Johan, 7327 AC Apeldoorn (NL); Wichers Schreur, Peter Wilhelmus Maria, 7327 AC Apeldoorn (NL); Lock, Cornelis, 7327 AC Apeldoorn (NL)
(74) Representative: Smulders, Theodorus A.H.J., Ir.

(56) References cited:
- EP-A- 0 294 243
- EP-A- 0 373 479
- WO-A-86/00283
- DE-A- 4 038 156
- GB-A- 2 228 777
- US-A- 4 756 510

## Description

The invention relates to a method for fitting a flexible line in at least one gas pipe of a gas distribution network, said gas pipe being used for supplying gas to users, the line being fitted without the users connected to the gas distribution network having to be shut off from the supply of gas, wherein the following steps are carried out:

A method and network of the above referred to type are known from EP-A-0 294 243.

In many countries, the gas distribution network comprises hundreds of kilometers of gas pipes, laid under the ground. These gas pipes do not only extend in towns and villages, but also between towns and villages and as such consist of a network which is present at many locations where people live and work. After all, in western countries, gas connections are present in many houses and factories for, for instance, heating the house, gas cooking, heating water, etc. A first object of the invention is to make further use of the existing infrastructure of the gas distribution network.

Another object of the invention relates to providing a solution to the problem that the costs of a cable network for information transmission are largely determined by the costs of installation, because generally, costly excavating works and repairs have to be performed in order to lay the information transmission cable under the ground. An example hereof is a cable network for a community aerial system, telephone system, computer data traffic, etc. If for instance small villages, remote from the large town where a reception aerial is positioned, have to be provided with a community aerial system, with the signals being provided from the large town, this implies that these excavation works have to be carried out over very large distances. As a consequence, the costs of the installation of the community aerial network generally cannot be earned back at all with the proceeds from the subscriptions concluded with the inhabitants of the village. Further, considerable costs may arise when a cable is to be laid under the ground under a road or paving. In that case, the road or paving should often be broken up. Hence, the second object of the invention is to provide an information transmission cable network which is considerably more economical, more in particular a glass fiber cable network which is considerably more economical.

EP-A-0 294 243 discloses a method wherein a cable or line for transmission of data and/or control signals is deployed inside a pipeline while the pipeline continues its normal operation. A fabric drogue is attached to the cable or line to be installed whereby the truck is urged along the pipeline by the fluid which is transported through the pipeline. Hence, the method uses the normal transport of fluid through the pipeline to in addition transport the drogue. In this case the fluid is a liquid such as water or oil. The European patent application 0 294 243 also relates to a transportation pipeline systems for transporting bulk gases. However, it is not disclosed how the drogue should be transported in case of a pipeline systems for gases.

A problem for the pipeline systems which are filled with gases is that there is no well defined direction in which the gas is transported through a pipeline. Depending on the supply of gas to the users of the pipeline the transport within the pipeline can be in either direction and may vary in time. Following the directions of EP-A-0 294 243 a drogue which is positioned in a pipeline filled with gas, will normally not move in a well defined direction, let alone that the drogue is capable of pulling a flexible line through the gas pipe.

The invention provides a method which gives a solution to this problem. In this the method for fitting a flexible line in at least one gas pipe of a gas distribution network, wherein said gas pipe is used for supplying gas to users, the line is fitted without the users connected to the gas distribution network having to be shut off from the supply of gas, wherein the following steps are carried out:
-1. at a first location of the gas pipe, a pull body is inserted into the gas pipe;
-2. at the first location of the gas pipe, a first fitting is connected to the gas pipe, the first fitting comprising a passage;
-3. a part of the line is inserted into the gas pipe via the passage of the first fitting, whilst a first free end of the line is connected to the pull body and the line extends, via the passage, from the inside of the gas pipe to the outside of the gas pipe; and subsequently after having carried out steps 1-3
-4. a gas pressure difference is created on either side of the pull body by means of the gas which is supplied to the users, so that as a result of the pressure difference, the pull body moves to a second location of the gas pipe and accordingly, pulls the line along wherein at least a circumferential edge of the pull body abuts at least almost against the inner wall of the gas pipe.

In this connection, the information transmission cable can for instance be used as part of a community aerial cable network, a telephone cable network, etc.

In accordance with the invention, the installation costs of the cable have been considerably reduced. After all, the existing infrastructure of the gas distribution network is used. Hence, the costs for the excavation works and breaking open roads or pavings, if necessary, are saved. It is essential that use can be made of a gas distribution network which is in operation. In other words, in accordance with the invention, the gas distribution network has a double function: via the gas distribution network both gas and information are transmitted.

The invention can be used for making intermunicipal connections for data transmission between towns, for opening up unprofitable areas and for making connections within towns.

In particular, at the second location, a second fitting is connected to the gas pipe, the second fitting comprising a housing that encloses a passage and the free end of the line being passed through the passage of the second fitting so that the line extends from the outside of the second fitting through the passage of the second fitting to the inside of the gas pipe.

In that case, the line can consist of an information transmission cable for transmitting information. The fittings establish a gastight sealing. The free ends of the information transmission cable are then located outside the gas distribution network, enabling the information transmission cable to be utilized for transmitting information.

It is also possible that in the last-mentioned case, the line consist of a hollow casing tube. If the line consists of a hollow casing tube, the open ends of the hollow casing tube are located outside the gas distribution network. After this, the information transmission cable can be fed through the hollow casing tube and, accordingly, through the gas pipe, in a manner known per se. The information transmission cable can then be introduced at the first open end of the hollow casing tube and subsequently be transported to the other open end. Of course, with the hollow casing tube, it is also possible to feed through more than one information transmission cable.

For transporting the above-mentioned line through the gas pipe, a sufficiently great gas pressure difference is necessary. If the information transmission cable or the hollow casing tube proves to be too heavy for being passed through the gas pipe over the desired distance at the maximally attainable gas pressure difference, according to a particular variant of the invention, the line can also consist of a (first) pull cord. Further, if the line consists of a first pull cord,
- at the second location, a second end piece can be connected to the gas pipe, the second end piece comprising a housing that encloses a passage;
- a free end of the information transmission cable or the casing tube can be fed through the passage of the second end piece so that the information transmission cable or casing tube extends from the outside of the second end piece through the passage of the second end piece to the inside of the gas pipe;
- the free end of the information transmission cable or the casing tube that is located inside the pipe can be connected to the first pull cord;
- the information transmission cable or casing tube can, by means of the first pull cord, be pulled through the gas pipe in the direction of the first location, by pulling the first pull cord out of the gas pipe at the first location, whereby the information transmission cable or casing tube is pulled into the gas pipe via the passage of the second end piece;
- at the first location, a first end piece can be connected to the gas pipe, the first end piece comprising a housing that encloses a passage;
- the free end of the information transmission cable or casing tube can be fed through the passage of the first end piece so that the information transmission cable or casing tube extends from the outside of the first end piece through the passage of the first end piece to the inside of the gas pipe.

In general, the first pull curd can be lighter than the information transmission cable or the casing tube, allowing it to be passed through over a larger distance at the gas pressure difference attainable.

If it is feared that the first pull cord will break when the information transmission cable or the casing tube is being passed through, the following variant of the method according to the invention can be used as well. Further, in this variant:
- at the second location of the gas pipe, a second fitting is connected to the gas pipe, the second fitting comprising a passage;
- via the passage of the second fitting, a first free end of a second pull cord is introduced into the gas pipe, the first free end of the second pull cord being connected to the first pull cord and the second pull cord extending from the inside of the gas pipe via the passage of the second fitting to the outside of the gas pipe;
- the first free end of the second pull cord is pulled to the first location by means of the first pull cord, by pulling the first pull cord out of the gas pipe at the first location;
- at the first location, a first end piece is connected to the gas pipe, the first end piece comprising a housing that encloses a passage and through which the information transmission cable or casing tube is passed, so that the information transmission cable or casing tube extends from the outside of the first end piece through the passage of the first end piece to the inside of the gas pipe;
- a free end of the information transmission cable or casing tube located inside the pipe is connected to the second pull cord;
- the information transmission cable or casing tube is pulled through the gas pipe in the direction of the second location by means of the second pull cord, by pulling the second pull cord out of the gas pipe at the second location, the information transmission cable or casing tube being pulled into the gas pipe via the passage of the first end piece;
- at the second location, a second end piece is connected to the gas pipe, the second end piece comprising a housing that encloses a passage;
- the free end of the information transmission cable or casing tube is passed through the passage of the second end piece so that the information transmission cable or casing tube extends from the outside of the second end piece through the passage of the second end piece to the inside of the gas pipe.

Because, in accordance with this particular method, use is made of a first and a second pull cord, the first pull cord can be of a particularly thin design. This implies that this method is suitable for passing information transmission cables through a gas pipe over very large distances. In this connection, one may for instance think of distances of 2 km and more, depending on the diameter of the gas pipe and the maximum pressure allowed in the gas distribution network. If, on the other hand, an information transmission cable is to be installed in a gas pipe over a distance of, for instance, 1 km, the use of only one pull cord may suffice, depending on the diameter of the gas pipe and the maximum pressure allowed in the gas distribution network.

To all above-mentioned methods, it applies that the first end piece, the second end piece, the pull body, the first fitting and/or the second fitting can be connected to the gas pipe in a manner known per se, for instance by means of saddles, bladders and bypass pipes, without the gas pressure in the gas distribution network falling out. In particular, the bladders are alternately positioned at the first or second location, so that the gas pipe section extending between the first and the second location continues to be provided with gas, also in the case where bladders are positioned. This has as an advantage that users connected to the gas pipe section between the first and the second location are supplied with gas also during the operations to be performed on the gas pipe. If the gas pipes are manufactured from polyethylene, the gas supply can be temporarily blocked at a location simply through compression of the flexible gas pipe. Hence, this does not require any saddles and bladders. When the compression is stopped, the pipes rebound into their original shape and the gas flow at that location is restored. This last particularly occurs with 4 bar gas pipes. Methods known by the name of 'stopping' can also be used for locally blocking the gas flow.

It is known from US 4,756,510 that a gas such as air or nitrogen can be used for transporting a pig through a pipeline to pull a cable attached to the pig through the pipeline. However, the gas mentioned is not the gas which is also transported through the pipeline during normal operation so that US-4,756,510 does not describe a method wherein the line is installed without the users connected to the gas distribution network having to be shut off from the supply of gas. Instead according to US 4,756,510 the fluid which is normally in the pipe is evacuated before the gas is used to move the pig.

Another problem of the known system and method is that once a first cable has been installed in the gas pipe it is not possible to install another cable in the same pipe. This is caused by the fact that in accordance with EP-A-0 294 243 the drogue will be prevented from moving through the pipe by the cable which is already installed in the pipe. Moreover, it is still time consuming and thereby relatively expensive to replace a already installed cable by another cable. The invention also provides a solution to this problem.

The gas distribution network according to the present invention is characterized in that, the distribution network further comprises at least one flexible hollow casing tube which likewise extends over a distance of at least 0.3 km inside at the least one gas pipe of the network, at least substantially in axial direction of said gas pipe, with the information transmission cable being included in the casing tube.

The casing tube involves a number of advantages. The information transmission cable can be replaced in a simple manner, because it lies loosely in the casing tube. Moreover, a number of information transmission cables can be fed through with one casing tube. Because the casing tube itself is gastight, the casing tube can comprise two open ends, extending outside the gas distribution network. This renders the subsequent insertion/replacement of information transmission cables particularly easy.

The invention will now be specified with reference to the accompanying drawings, wherein:
Figs. 1.1-1.6 show the gas distribution network and, schematically, the preparatory operations to be successively performed for fitting a glass fiber cable in a gas pipe of a gas distribution network;
Figs. 2.1-2.9 show the gas distribution network and a possible method for fitting a glass fiber cable in the gas pipe of the gas distribution network according to Fig. 1;
Figs. 3.1 and 3.2 respectively show a part of a gas distribution network before a glass fiber cable has been fitted and an alternative embodiment of a gas distribution network comprising a glass fiber cable;
Figs. 4.1-4.4 show the gas distribution network and an alternative method for fitting a glass fiber cable in the gas distribution network according to Fig. 1;
Figs. 5.1-5.2 show a possible embodiment of a fitting that can be used for providing a pull cord in a pipe of a gas distribution network according to the invention;
Figs. 6.1-6.2 show a possible embodiment of a pull body that can be used for fitting a pull cord in a pipe of the gas distribution network according to the invention;
Figs. 7.1-7.2 show a possible embodiment of an end piece for a gas distribution network according to the invention;
Fig. 8.1 shows the gas distribution network comprising a casing tube with a glass fiber cable included therein; and
Fig. 8.2 shows a part of the casing tube and the glass fiber cable of Fig. 8.1.

On the basis of the drawings, a gas distribution network according to the invention will be described comprising an assembly of gas pipes for supplying gas, via these gas pipes, to the users of the gas coupled to the gas pipes. The gas distribution network further comprises at least one glass fiber cable extending inside at least one gas pipe of the network through a distance of at least 0.3 km and preferably at least 1 km. The glass fiber cable can then be used for transmitting information, with the gas pipe wherein the glass fiber cable is accommodated being simultaneously used for transmitting gas. For obtaining such a gas distribution network, an existing gas distribution network is started from. This existing gas distribution network is used in a normal manner for supplying gas to users coupled to the distribution network. As will be explained hereinafter, in accordance with the method, the glass fiber cable can be fitted in at least one gas pipe of the gas distribution network without requiring that the gas supply to users coupled to the gas distribution network be shut off.

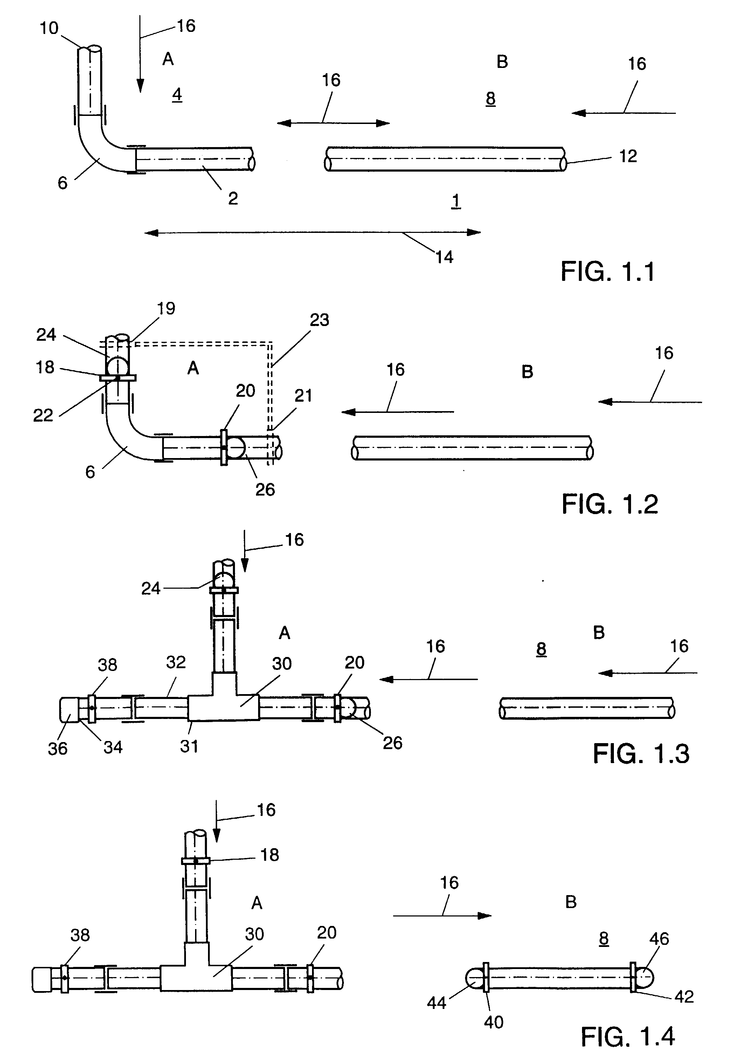

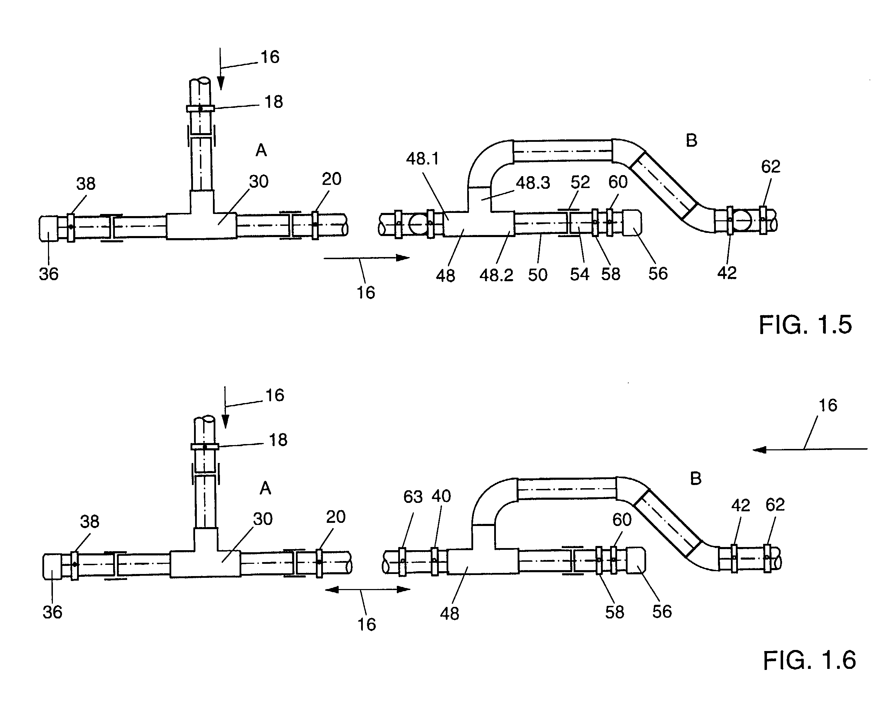

With reference to Figs. 1.1-1.6, the preparatory operations are described which have to be performed on the gas distribution network before the insertion of the glass fiber cable can be started. The first operations can for instance consist in exploring the section, with pilot trenches being made, if required. Further, the network pressure can be increased from 100 mbar to, for instance, 200 mbar. This last will preferably be carried out a considerable time in advance in order to prevent any problems with house-pressure regulators or gas pressure regulating stations. This involves attention being paid to the setting of the security devices of the gas pressure regulating stations connected to this part of the network. Further, users located along the section can be informed of an interruption, if any, of the gas delivery. It is emphasized that this last concerns an emergency situation, because, by contrast, in accordance with the invention, there will be no interruption of the gas delivery.

Finally, for instance pull cords to be further described can be wound on winches, with which the glass fiber cable can be pulled into the gas pipe. However, the actual work starts with the excavation of the starting point and the end point. For the sake of convenience, it is assumed that both the starting point and the end point are located under the ground. However, this is not necessarily the case. In this example, the starting point consists of a first location and the end point consists of a second location.

Fig. 1.1 shows a portion of the gas distribution network1 comprising at least one gas pipe 2, which gas pipe 2 comprises a bend 6 at the first location 4. At the second location 8, the gas pipe 2 consists of a straight line. The gas pipe 2 forms part of an annular network. This means that the gas can be supplied to the users from a first side 10 as well as from a second side 12 of the gas pipe 2, which users are connected to the location line 14 of the gas pipe 2 located between the first location 4 and the second location 8. This gas flow is schematically indicated by the arrows 16.

In fact, Fig. 1.1 shows two situations that may occur in practice. Indeed, at the first location, where the glass fiber cable is to be introduced, the gas pipe 2 has a bend, whereas at the second location 8, where the glass fiber cable leaves the gas pipe 2 again, the gas pipe 2 is constructed as a straight pipe.

First of all, at the first location, a first saddle 18 and a second saddle 20 are positioned on both sides of the bend respectively. These saddles, known per se, consist of a top and a bottom saddle which, in assembled form, can be positioned around the gas pipe 2 so as to be gas-sealing. In such a saddle, a normally closed opening 22 is present. This opening is for instance closed by a rubber valve member, not shown. The rubber valve member has at its center two mutually perpendicular incisions. These incisions extend from the center to, for instance, adjacent the edge of the valve member. Next, for instance a running drill can be moved through the rubber valve member in the direction of the gas pipe 2 in order to drill a hole in the gas pipe 2. When a hole has thus been provided in the gas pipe 2 and the running drill is then withdrawn, the rubber valve member will close again of its own accord, so that no gas can escape from the gas pipe 2 to the outside. In this manner, by means of the two saddles 18, 20 respectively, two holes can be made in the gas pipe 2. Then, at the first saddle 18 via the opening 22 and the hole in the gas pipe 2 drilled at the first saddle, a first bladder 24 is provided in the gas pipe 2. Likewise, via the second saddle 20, a second bladder 26 is provided in the gas pipe 2. When the first and second bladders 24, 26 are then inflated, they will each press, along their circumferential edges, against the inner wall of the gas pipe 2. This situation is shown in Fig. 1.2.

Because the bladders 24 and 26 press against the inner wall of the gas pipe 2, they seal the gas pipe 2 at that location. As a result, the bend 6 can for instance be removed, for instance by sawing it from the pipe, without involving the escape of a considerable amount of gas. Moreover, the users connected to the gas pipe 2 along the location line 14 will still be supplied with gas from the second side 12 of the gas pipe 2. If the second side 12 of the gas pipe comprises a closed-off end, the users of the location line 14 will not be supplied with gas from the second side 12 of the gas pipe 2. In this latter case, a bypass 23 is fitted by means of the saddles 19, 21, as is shown in dotted lines in Fig. 1.2 only. Via the bypass 23, gas is as yet supplied to the users of the location line 14.

The bend 6 is replaced by a T-piece 30 as shown in Fig. 1.3. The third leg 31 of the T-piece 30 is connected to a piece of pipe 32, a free end 34 of which is closed off by a fitting 36. Moreover, a saddle 38 is provided around the piece of pipe 32 between the T-piece 30 and the fitting 36.

Subsequently, the first and second bladders 24, 26 are deflated, whereupon they are removed via the openings 22 of the first and second saddles 18, 20 respectively (see Fig. 1.4). Also, at the second location 8, a fourth and a fifth saddle 40 and 42 are provided, slightly spaced apart. After this, via the saddles 40, 42, a third and a fourth bladder 44, 46 are provided adjacent the saddles 40, 42 in a manner known per se, via these saddles. The effect is that users connected to the location line 14 are still supplied with gas, this time from the first side 10 of the gas network. Of course, the portion of the gas pipe located between the saddles 40 and 42 is closed off from the rest of the network and can therefore be removed in order to provide a bridge as is shown in Fig. 1.5. The bridge consists of a T-piece 48 a first leg 48.1 of which is connected, adjacent the fourth saddle 40, to the network and the second leg 48.2 of which is connected to a first end of a piece of pipe 50. The other end of the piece of pipe 50 is connected, via a sleeve 52, to a first end of another piece of pipe 54, the other end of the piece of pipe 54 being closed off by an fitting 56 comparable with the fitting 36. Further, around the piece of pipe 54, a sixth and a seventh saddle 58, 60 are provided. By means of a number of bends, the third leg 48.3 of the T-piece is connected to the second side 12 of the gas distribution network. An eighth saddle 62 is further positioned, so that the saddle 42 is located between the saddle 62 and the third leg 48.3 of the T-piece (see Fig. 1.5). Also, between the fourth saddle 40 and the second saddle 20, adjacent the fourth saddle 40, a ninth saddle 63 is further positioned.

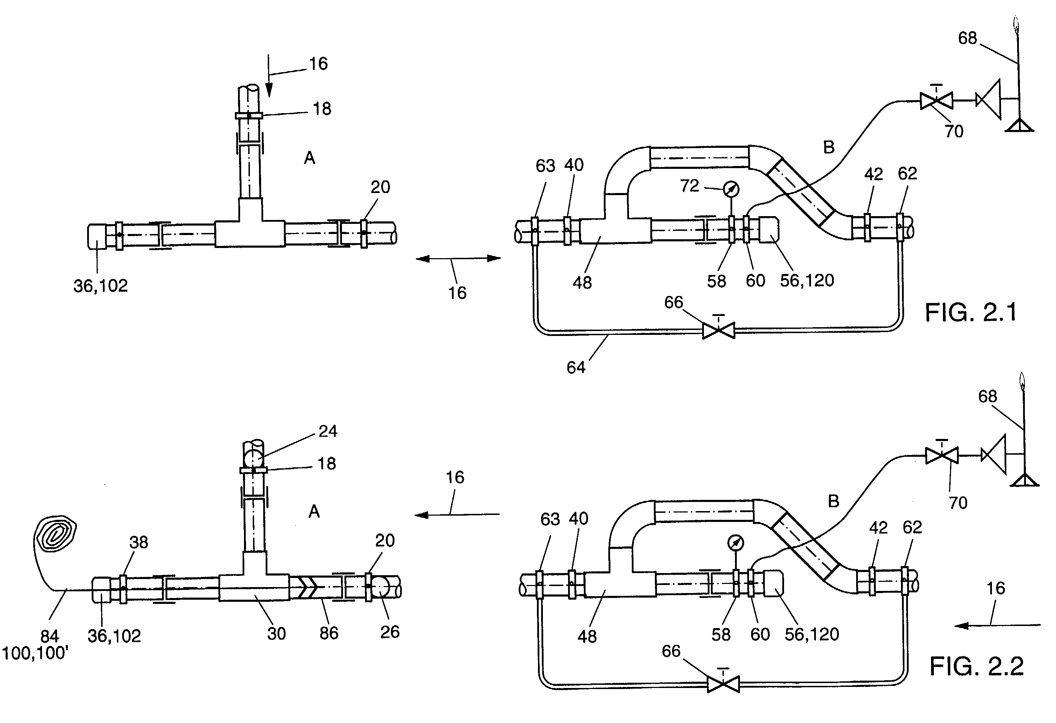

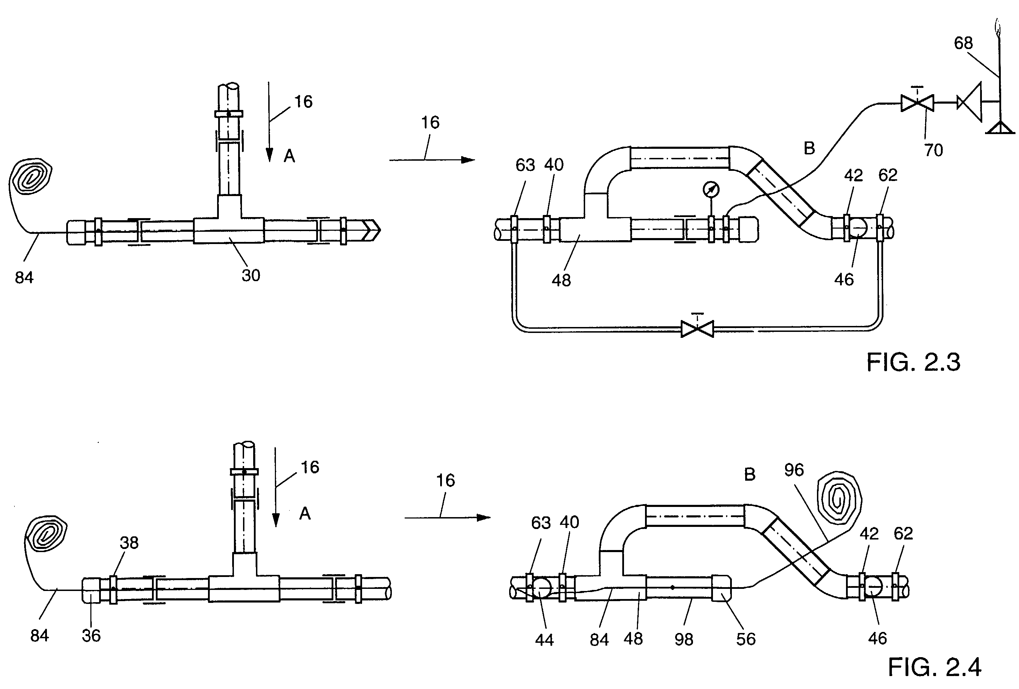

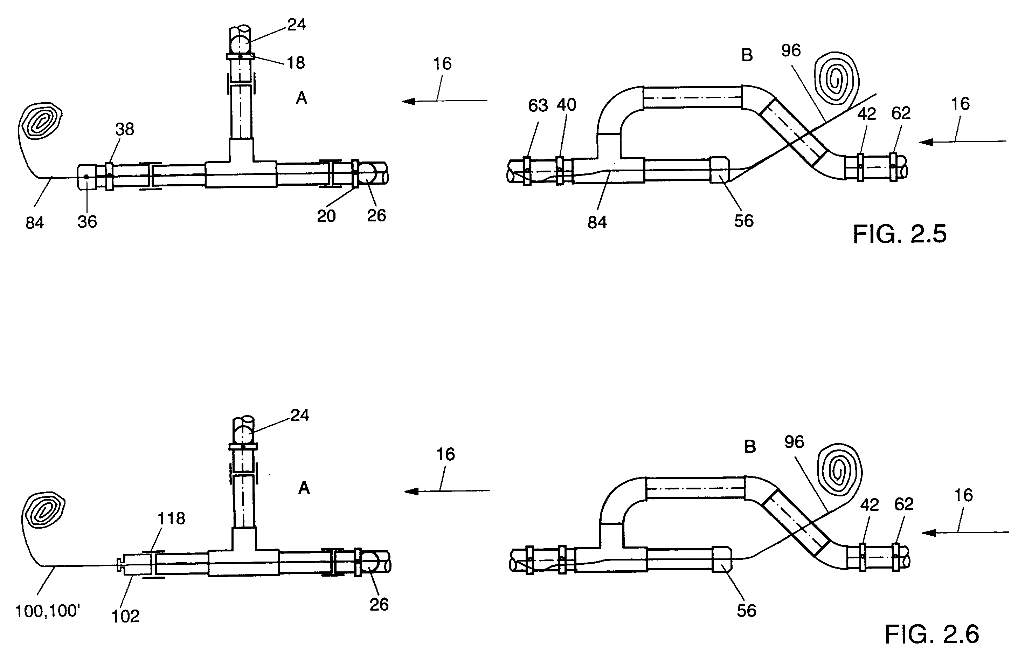

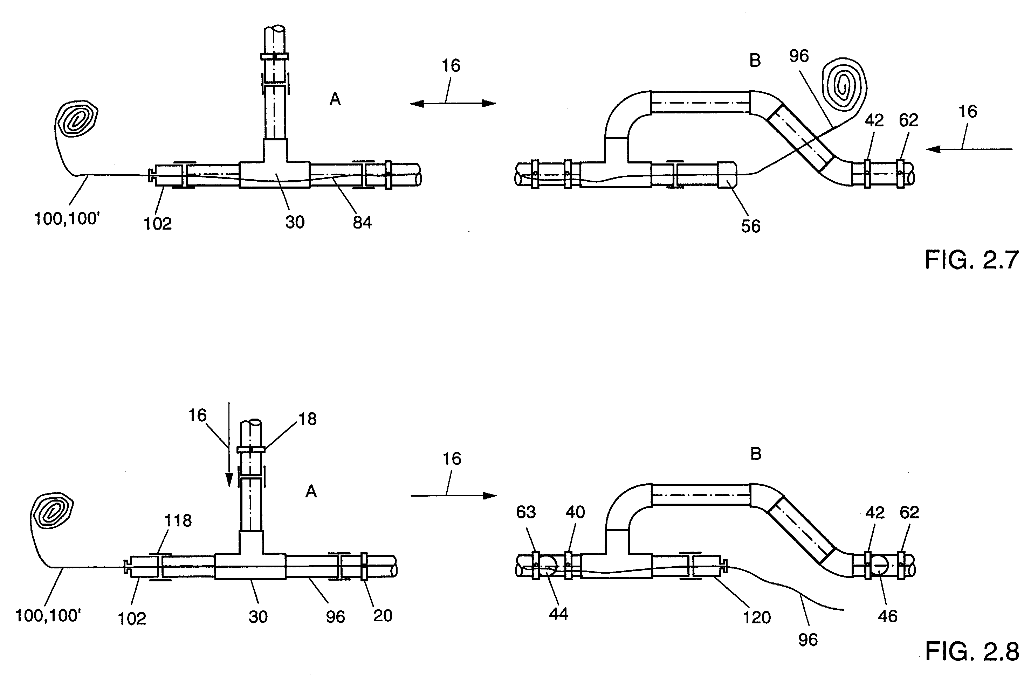

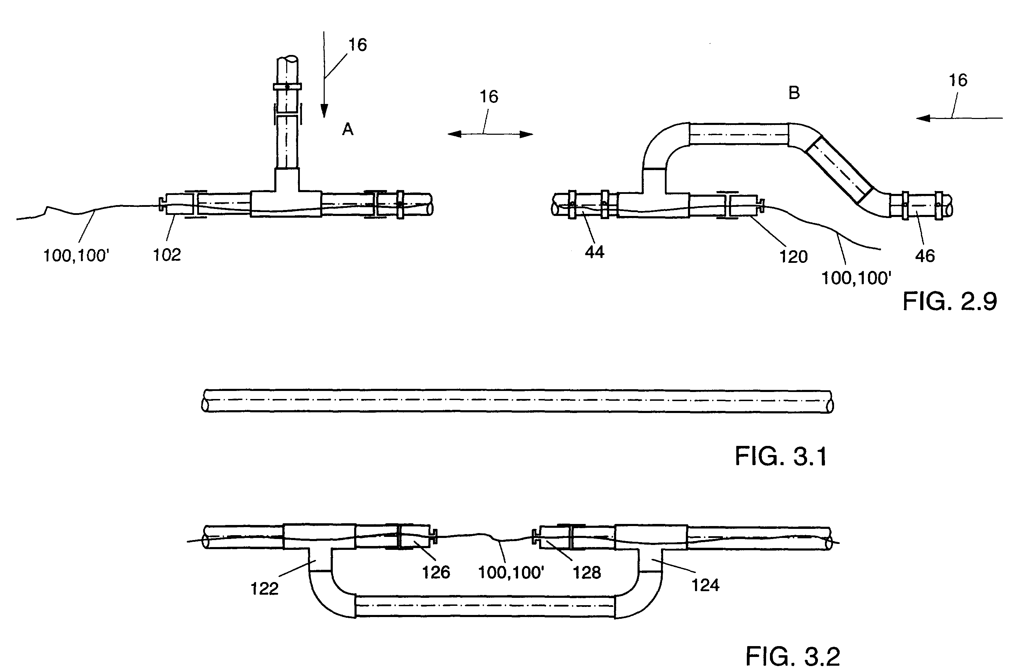

Next, all bladders are removed, so that the situation as shown in Fig. 1.6 is created. The gas distribution network is now entirely prepared for performing the operations wherein the glass fiber cable is actually fitted. The actual fitting operation of the glass fiber cable will now be discussed with reference to Fig. 2.

First, the saddles 63 and 62 are interconnected by means of a bridge 64. This bridge is in fluid connection with the portions of the gas pipe at the saddles 63 and 62. The bridge 64 comprises a ball valve 66, which is as yet in closed condition. Also, the saddle 60 is connected to a blow-off device 68. In operation, the blow-off device 68 is in fluid connection with the gas pipe adjacent the saddle 60. The device further comprises a ball valve 70 whereby the blow-off device 68 is as yet closed off. Finally, via saddle 58, a manometer 72 is connected to the gas pipe (see Fig. 2.1).

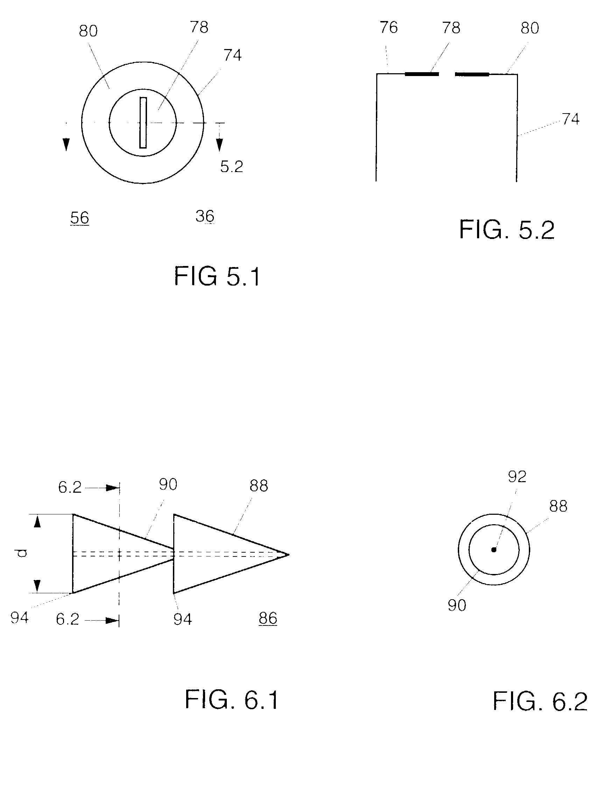

Figs. 5.1 and 5.2 show a further elaboration of the fittings 36 and 56. The fittings 36, 56 are each of cup-shaped design and comprise a cylindrical sidewall 74 extending from a bottom part 76 of the fittings 36, 56. The bottom part 76 comprises a round disk 78 which is rotatably connected to an annular part 80 of the bottom part 76. An outer edge of the annular part 80 is in turn connected to the sidewall 74. The disk 78 has an opening in the form of an elongated slot 82. The slot 82 can be temporarily closed by a sealing cap not shown.

As is shown in Fig. 2.2, bladders 24 and 26 are placed at the saddles 18 and 20. The fitting 36 is temporarily removed. Next, a free end of a pull cord 84 is passed through the slot 82 of the fitting 36. The free end of the pull cord 84 is connected to a pull body 86. The pull body 86 is shown in Fig. 6 and comprises a first conical body 88 and a second conical body 90. The first and second conical bodies 88 and 90 have a common axial shaft and are each connected, adjacent the apices thereof, to a bar-shaped body 92. Moreover, the tips of the two conical bodies point in the same direction.

After the pull cord is for instance connected to the bar-shaped shaft 92, the pull body 86 is inserted into the gas pipe. After this, the fitting is connected to the gas pipe again, to create a situation as shown in Fig. 2.2. The pull cord 86 is of flat design and fits tightly in the slot 82.

Then, the bladders 24 and 26 are removed and the bladder 46 is positioned between the saddles 42 and 62 via the opening of the saddle 42 (see Fig. 2.3). The ball valve 70 is opened and the flame of the blow-off provision 68 is lighted. As can be seen in Fig. 2.2, the pull body is slid into the gas pipe so far that it is located between the T-pieces 30 and 48. The pull body 86 has a cross section d so that the pull body, adjacent its circumferential edges 94, closely connects to the inside of the gas pipe 2. Since a portion of the gas is blown off via the blow-off device 68, a pressure difference will be created on either side of the pull body 86 that causes the pull body 86 to move in the direction of the T-piece 48. Accordingly, the pull body will pull along the pull cord 84. Thus, the pull cord is drawn into the gas pipe 2 via the slot 82 of the fitting 36. The ball valve 66 can be opened if the manometer 72 indicates that the pressure in the gas pipe 2 for instance drops below 40 mbar.

The pull body will eventually arrive at the second location. The pull body is eventually located between the fitting 56 and the saddle 40. The pressure is thereby reduced again to, for instance, 100 mbar. Next, via the saddle 63, a bladder 44 is positioned between the saddle 63 and the saddle 40 (see Fig. 2.4). In the situation as shown in Fig. 2.4, the fitting 56 can then be removed in order to pull the pull body 86 out of the gas pipe 2. The pull body is detached from the first pull cord 84. Then, a second pull cord 96 is passed through the slot 82 of the fitting 56. The free end of the second pull cord 96 is then fixed to the free end of the first pull cord 84. Then, the second fitting 56 is connected, via a piece of pipe 98, to the T-piece 48 (see Fig. 2.4). Hence, the manometer and the blow-off device are removed. Then, the bladders 44 and 46, shown in Fig. 2.4, are removed and the second pull cord is pulled to the first location 4 by means of the first pull cord. This can be carried out in a simple manner by gradually pulling the first pull cord 84 out of the gas pipe at the first location 4.

When the free end of the second pull cord has arrived at the first location 4, two bladders 24 and 26 are again positioned at the first and second saddles 18, 20 respectively. Next, the first fitting 36 is removed. After this, the first pull cord is detached from the second pull cord. Next, a glass fiber cable 100 is passed through an opening of an end piece 102.

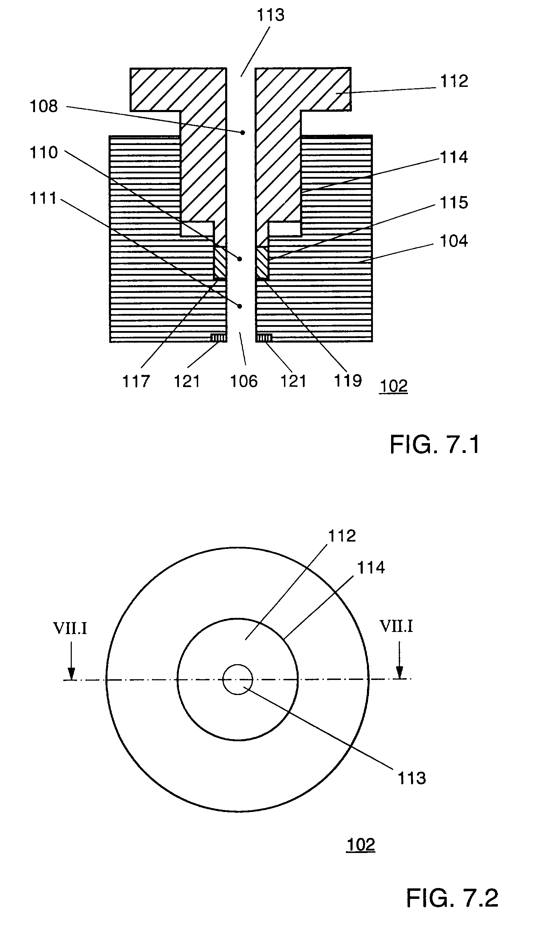

A possible embodiment of the end piece is shown in Fig. 7. The end piece 102 consists of a bush-shaped body 104 provided with a drilled channel 106. The diameter of the drilled channel at a top portion 108 of the bush-shaped body is larger than the diameter of the drilled channel at a central portion 110. Further, the diameter of the drilled channel 106 at the central portion 110 is larger than the diameter of the drilled channel at a bottom portion 111. The top portion 108 of the drilled channel 106 is further provided with screw thread. The bush-shaped body 104 further comprises a cylindrical screw body 112 having a drilled channel 113 whose diameter corresponds to the diameter of the drilled channel 106 at the bottom portion 111. An outer wall 114 of the screw body 112 is provided with screw thread capable of cooperating with the above-mentioned screw thread of the drilled channel 106. The screw body 112 further comprises a bottom portion having an outside diameter smaller than the outside diameter of that portion of the outer wall on which the screw thread is provided. This reduced diameter is slightly smaller than the diameter of the drilled channel 106 in the central portion 110 of the bush-shaped body. Further, located in the bottom portion 111 of the bush-shaped body is a flexible rubber bush 115, which is connected, near the bottom end thereof, to the bush-shaped body in a manner known per se. The edge 119 of the rubber bush 115 rests on a collar 117 formed by the transition in diameter between the central portion 110 and the bottom portion 111 of the drilled channel 106. When the screw body 112 is then screwed into the top portion of the drilled channel 106, the end face of the bottom part of the screw body 112 will eventually contact the top edge of the rubber bush 115. It will be understood that the rubber bush 115 is clamped when the screw body 112 is further screwed inwards. Together with the inner space of the rubber bush 115, the drilled channel of the screw body 112 forms a passage for the glass fiber cable. The inside diameter of the bush 115 is slightly larger than the diameter of the drilled channel 106 at the bottom portion 111. Finally, adjacent the open end at the bottom side of the drilled channel 106, the bush-shaped body 104 further comprises a rubber seal 121.

In this manner, the glass fiber cable is passed through the passage of the end piece 102, the free end of the glass fiber cable being attached to the second pull cord 96. The seal 121 provides a sealing during the period when the rubber bush 115 is not yet clamped in. The diameter of the glass fiber cable corresponds to the diameter of the drilled channel 113. This means that during the passing through of the glass fiber cable, the inside of the rubber bush 115 does not contact the glass fiber cable, so that the rubber bush 115 cannot be damaged. Next, the end piece 102 is connected to the gas pipe by means of a sleeve 118 (see Fig. 2.6). Then, the bladders 24, 26 still shown in Fig. 2.6 are removed to create the situation as shown in Fig. 2.7. In this situation, adjacent the second side 12, the second pull cord 96 is pulled out of the gas pipe. At the same time, at the first side 10, the glass fiber cable is introduced into the gas pipe via the end piece 102. When the free end of the glass fiber cable 100 has arrived at the second side 12, a bladder 44 is positioned again between the saddles 63 and 40 via the saddle 63 (see Fig. 2.8). Also, via the saddle 42, a bladder 46 is positioned again between the saddles 42 and 62 (see Fig. 2.8). The fitting 56 can now be removed, so that the free end of the glass fiber cable can be pulled out of the gas pipe. Then, the free end of the gas pipe is passed through a passage of a second end piece 120, which second end piece is identical to the first end piece 102. The second end piece is then connected to the gas pipe again. After this, the bladders 44 and 46 can be removed, as is shown in Fig. 2.9. If so desired, the cable can be pulled through still further. After this, the screw body 112 of the second end piece 120 is screwed inwards, so that the rubber bush 115 of the second end piece 120 is clamped. The clamping of the rubber bush 115 has as a result that the inside diameter of the rubber bush will decrease, causing the glass fiber cable 100 to be clamped at that location. In this manner, a permanent gastight seal is obtained. Similarly, the screw body 112 of the first end piece 102 is screwed inwards so that the rubber bush 115 of the first end piece 102 forms a gastight seal. In this manner, a glass fiber cable 100 is fitted in the gas pipe 2 without users connected to a location line 14 of the gas pipe 2 having been cut off from gas. The glass fiber cable is now ready for being used for transmitting information.

It will be understood that within the framework of the invention many variants are conceivable. For instance, in Fig. 2.6 it is possible to interconnect the free ends of the glass fiber cable and the second pull cord by means of a pull body as is for instance shown in Fig. 6. The glass fiber cable can then be passed through the gas pipe 2 both by pulling the second pull cord out of the gas pipe adjacent the second side 12 and by utilizing blow-in apparatus adjacent the first side 10, so as to increase the pressure in the gas pipe 2 from the first side, so that as a result of the pressure difference created, the pull body will move in the direction of the second side 12.

When the glass fiber cable is to be passed through a gas pipe over a very large distance, this can optionally be carried out in stages. An example hereof is given in Fig. 3.

Fig. 3.1 shows the situation before the glass fiber cable was inserted, and Fig. 3.2 shows the situation after the glass fiber cable was inserted. The two T-pieces 122, 124 are fitted in the same manner as the T-piece 48 of Fig. 2. Further, at the end piece 126 connected to the T-piece 122, the glass fiber cable is fed through in a manner which is entirely comparable with the manner as explained in relation to the end piece 120. Subsequently, the glass fiber cable is passed through the end piece 128 connected to the T-piece 124 in a manner which is entirely analogous with the manner as explained in relation to the first end piece 102.

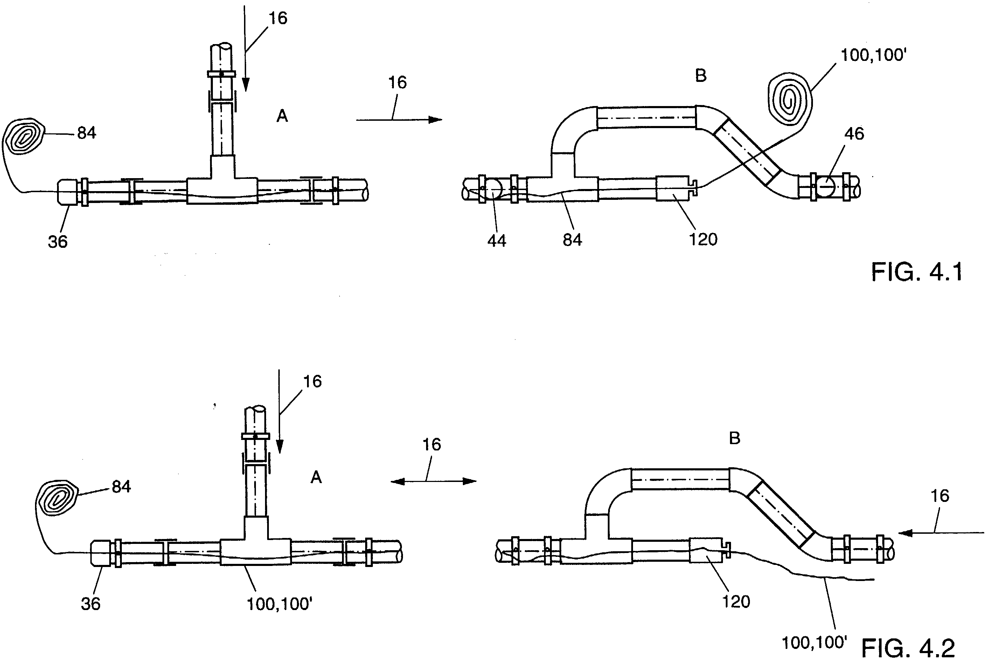

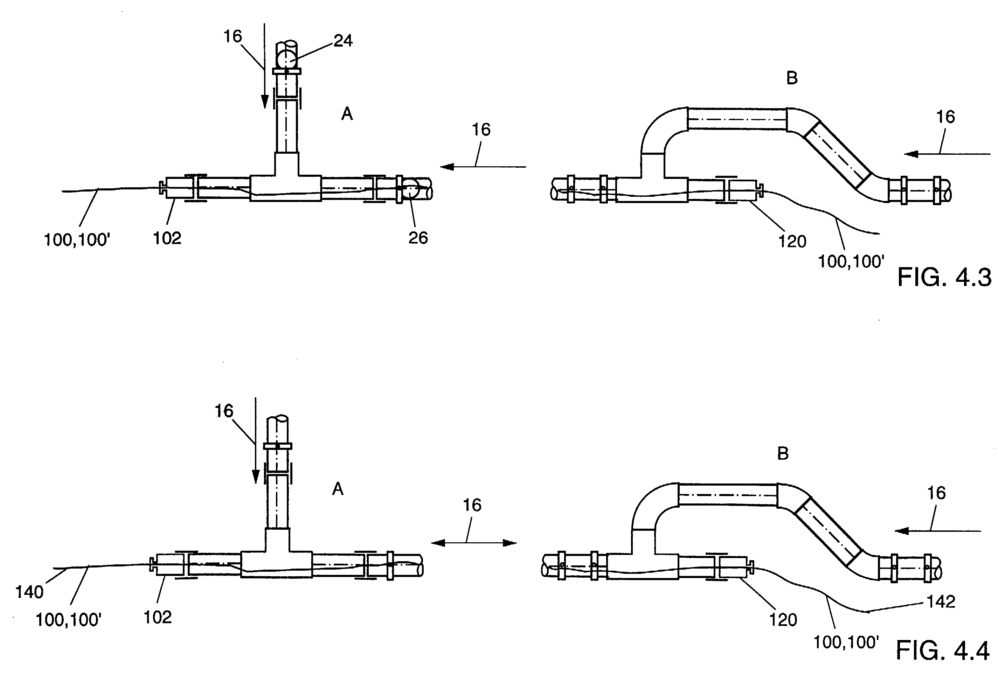

It will also be understood that in the case where the glass fiber cable is to be fitted over a short distance only, it may suffice to utilize only one pull cord. In that case, a first pull cord is first arranged as discussed with reference to Figs. 2.1-2.3. Then, rather than the second pull cord being attached to the first pull cord, as is shown in Fig. 2.4, the glass fiber cable 100 is attached, at the second side 12, to the free end of the first pull cord 84. This situation is shown in Fig. 4.1. First, the bladders 44 and 46 are of course positioned again, in order to remove the second fitting 56, starting from the situation according to Fig. 2.3. Then, the glass fiber cable is passed through at the passage of the second end piece 120, and the free end of the glass fiber cable is attached to the free end of the first pull cord. After this, the second end is connected to the gas pipe and the bladders 44 and 46 can be removed. Then (see Fig. 4.2), the first pull cord 84 is pulled out of the gas pipe at the first side 10, so that the glass fiber cable is pulled into the gas pipe at the second side 12. When the free end of the glass fiber cable has arrived at the first side 10, the bladders 24 and 26 are positioned again as shown in Fig. 4.3. This enables the fitting 36 to be removed and replaced by the end piece 102, with the glass fiber cable being passed through the passage of the end piece 102 (see Fig. 4.3). Then, the bladders 24 and 26 are removed as is shown in Fig. 4.4. The glass fiber cable 100 has now been fitted and is ready for use.

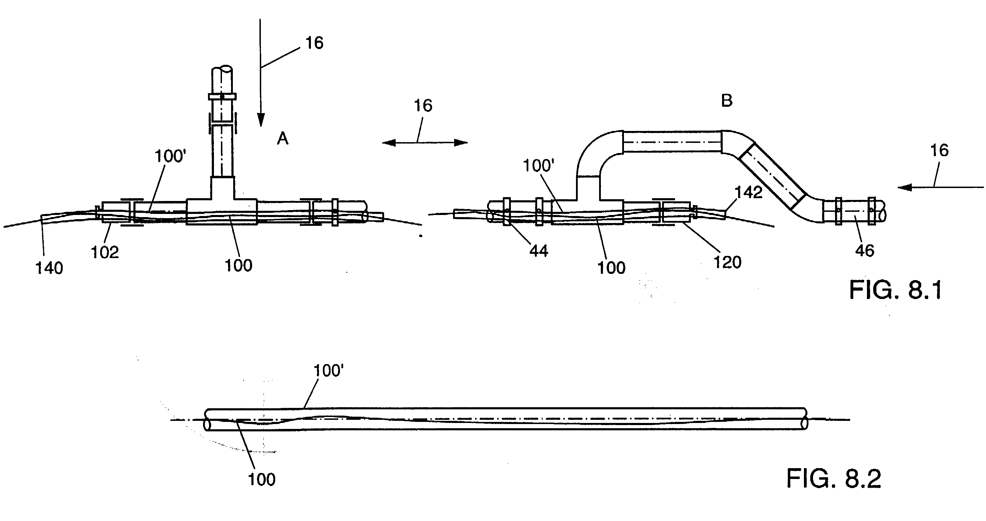

The gas distribution network can also be provided with other lines instead of the glass fiber cable. For instance, the gas distribution network can also be provided with a casing tube. This casing tube can be fitted in an entirely analogous manner as described hereinabove in relation to the glass fiber cable. In that case, the casing tube consists of a flexible hollow tube that is generally resistant to gas. Preferably, the casing tube is also impermeable to gas. The casing tube can be included in the gas distribution network, as is for instance explained with reference to Figs. 2.1-2.9 or with reference to Figs. 4.1-4.4 for the glass fiber cable 100. This creates a situation for the casing tube as shown in Fig. 2.9 and Fig. 4.4. For the sake of simplicity, the casing tube is indicated by reference numeral 100'. The casing tube of Fig. 4.4 consists of a hollow, flexible tube having a first open end 140 and a second open end 142. Now, for instance a glass fiber cable 100 can be introduced at the first open end 140. The glass fiber cable 100 is then passed, in a manner known per se, through the casing tube 100' towards the end 142 of the casing tube 100'. This creates the situation as shown in Fig. 8.1.

Fig. 8.2 shows a portion of the casing tube 100' with the glass fiber cable 100 included therein, the rest of the gas distribution network having been left out. Of course, it is also possible to pass two or more glass fiber cables through the casing tube 100'.

The end pieces 102 and 120 and in particular the inside diameter of the drilled channel 106 are adjusted so that they can form a gastight seal with the casing tube 100'. Generally, the drilled channel will have a larger diameter when a seal is to be formed with the glass fiber cable only.

In accordance with another aspect of the invention, a line, such as an information transmission cable (glass fiber cable) or a casing tube, can also be passed through in a gas pipe without the use of pull cords. To this end, first, the method steps as discussed with reference to Figs. 1.1-1.6 are for instance followed. However, instead of the fittings 36, 56, the end pieces 102 and 120 can now be fitted directly. Then, the line 100, 100' is passed through the gas pipe in an entirely analogous manner, as is discussed with regard to the pull cord 84 in Figs. 2.1-2.3. This will involve the end piece 102 tightly enclosing the line 100, 100', so that little or no gas can escape when the line 100, 100' is being passed through. When the pull body 86 has reached the end piece 120, a bellows 44 can be disposed between the saddles 40 and 36 and then, by optionally temporarily removing the end piece 120, a free end of the line 100, 100' can be pulled out of the gas pipe. Next, the end piece 120 can be placed back, with the line 100, 100' being passed through the drilled channel 106 of the end piece 120. After removal of the bellows, this results in the situation as shown in Fig. 2.9.

It is observed that the function of a fitting and an end piece in the above-discussed embodiments is in fact the same. Hence, the term 'fitting' also encompasses the end piece, while the term 'end piece' also encompasses the term 'fitting'.

The invention is not limited to glass fiber cables. Other information transmission cables, such as for instance multicore copper cables, also belong to the application of the invention.

## Claims

1. A method for fitting a flexible line (100, 100')in at least one gas pipe (2) of a gas distribution network (1), said gas pipe (2) being used for supplying gas to users, the line being fitted without the users connected to the gas distribution network having to be shut off from the supply of gas, wherein the following steps are carried out:
- 1.at a first location (4) of the gas pipe (2), a pull body (86) is inserted into the gas pipe;
- 2.at the first location (4) of the gas pipe (2), a first fitting (36, 102) is connected to the gas pipe, the first fitting comprising a passage (86, 106);
- 3.a part of the line is inserted into the gas pipe (2) via the passage of the first fitting (36, 102), whilst a first free end of the line is connected to the pull body (86) and the line extends, via the passage (82, 106), from the inside of the gas pipe (2) to the outside of the gas pipe; and subsequently after having carried out steps 1-3
- 4.a gas pressure difference is created on either side of the pull body (86), so that as a result of the pressure difference, the pull body moves to a second location of the gas pipe and, accordingly, pulls the line along wherein at least a circumferential edge (94) of the pull body (86) abuts at least almost against the inner wall of the gas pipe.

2. A method according to claim 1, wherein at the second location (8), a second fitting (56, 120) is connected to the gas pipe, the second fitting (56, 120) comprising a housing which encloses a passage (82, 106), the free end of the line being passed through the passage (82, 106) of the second fitting (56, 120) so that the line extends from the outside of the second fitting (56, 120) through the passage (82, 106) of the second fitting (56, 120) towards the inside of the gas pipe (2).

3. A method according to claim 1, wherein the line consists of an information transmission cable (108) for transmitting information.

4. A method according to claim 1, wherein the line consists of a hollow flexible casing tube (100').

5. A method according to claim 1, wherein the line consists of a first pull cord (84).

6. A method according to claim 5, wherein further:
- at the second location of the gas pipe, a second fitting (56) is connected to the gas pipe, the second fitting (56) comprising a passage (82);
- via the passage (82) of the second fitting (56), a first free end of a second pull cord (96) is inserted into the gas pipe, the first free end of the second pull cord (96) being connected to the first pull cord (84) and the second pull cord (96) extending, via the passage (82) of the second fitting (56), from the inside of the gas pipe (2) to the outside of the gas pipe;
- said first free end of the second pull cord (96) is pulled to the first location (4) by means of the first pull cord (84), by pulling the first pull cord (84) out of the gas pipe (2) at the first location (4);
- at the first location (4), a first end piece (102) is connected to the gas pipe, the first end piece (102) comprising a housing which encloses a passage (106) and through which the information transmission cable (100) is passed in such a manner that the information transmission cable (100) extends from the outside of the first end piece (102) through the passage (106) of the first end piece to the inside of the gas pipe (2);
- a free end of the information transmission cable located inside the pipe is connected to the second pull cord (96);
- the information transmission cable is pulled through the gas pipe by means of the second pull cord (96) in the direction of the second location (8), by pulling the second pull cord (96) out of the gas pipe at the second location (8), the information transmission cable (100) being pulled, via the passage (106) of the first end piece (102), into the gas pipe;
- at the second location (8), a second end piece (120) is connected to the gas pipe, the second end piece comprising a housing enclosing a passage (106);
- the free end of the information transmission cable (100) is passed through the passage (106) of the second end piece (120) in such a manner that the information transmission cable extends from the outside of the second end piece through the passage of the second end piece to the inside of the gas pipe.

7. A method according to claim 5, wherein, further:
- at the second location (8), a second end piece (120) is connected to the gas pipe, the second end piece (120) comprising a housing enclosing a passage (106);
- a free end of the information transmission cable (100) is passed through the passage (106) of the second end piece (120) so that the information transmission cable (100) extends from the outside of the second end piece (120) through the passage (106) of the second end piece (120) to the inside of the gas pipe (2);
- the free end of the information transmission cable (100) located inside the pipe is connected to the first pull cord (84);
- the information transmission cable (100) is pulled through the gas pipe in the direction of the first location (4) by means of the first pull cord (84), by pulling the first pull cord (84) out of the gas pipe at the first location (4) , whereby the information transmission cable (100) is pulled, via the passage (106) of the second end piece (120), into the gas pipe;
- at the first location (4), a first end piece (120) is connected to the gas pipe (2), the first end piece comprising a housing enclosing a passage (106);
- the free end of the information transmission cable (100) is passed through the passage (106) of the first end piece (102) in such a manner that the information transmission cable extends from the outside of the first end piece (102) through the passage (106) of the first end piece to the inside of the gas pipe.

8. A method according to claim 5, wherein, further:
- at the second location (8) of the gas pipe (2), a second fitting (56) is connected to the gas pipe, the second fitting (56) comprising a passage (82);
- via the passage (82) of the second fitting (56), a first free end of a second pull cord (96) is inserted into the gas pipe (2), the first free end of the second pull cord (96) being connected to the first pull cord (84) and the second pull cord (96) extending, via the passage (82) of the second fitting (56), from the inside of the gas pipe to the outside of the gas pipe;
- said first free end of the second pull cord (96) is pulled to the first location (4) by means of the first pull cord (84), by pulling the first pull cord (84) out of the gas pipe (2) at the first location (4);
- at the first location (4), a first end piece (102) is connected to the gas pipe, the first end piece (102) comprising a housing which encloses a passage (106) and through which a flexible hollow casing tube (100') is passed in such a manner that the casing tube (100') extends from the outside of the first end piece (102) through the passage (106) of the first end piece to the inside of the gas pipe (2);
- a free end of the casing tube (100') located inside the pipe is connected to the second pull cord (96);
- the casing tube (100') is pulled through the gas pipe (2) by means of the second pull cord (96) in the direction of the second location (8), by pulling the second pull cord (96) out of the gas pipe at the second location, the casing tube (100') being pulled, via the passage (106) of the first end piece (102), into the gas pipe (2);
- at the second location (8), a second end piece (120) is connected to the gas pipe, the second end piece (120) comprising a housing enclosing a passage (106);
- the free end of the casing tube (100')is passed through the passage (106) of the second end piece (120) in such a manner that the casing tube (100') extends from the outside of the second end piece (120) through the passage (106) of the second end piece (120) to the inside of the gas pipe (2).

9. A method according to claim 5, wherein, further:
- at the second location (8), a second end piece (120) is connected to the gas pipe, the second end piece (120) comprising a housing enclosing a passage (106);
- a free end of a casing tube (100') is passed through the passage of the second end piece in such a manner that the casing tube (100') extends from the outside of the second end piece (120) through the passage (106) of the second end piece to the inside of the gas pipe (2);
- the free end of the casing tube (100') located inside the pipe is connected to the first pull cord (84);
- the casing tube (100') is pulled through the gas pipe by means of the second pull cord (84), in the direction of the first location (4) by pulling the first pull cord (84) out of the gas pipe (2) at the first location (4), whereby the casing tube (100') is pulled into the gas pipe (2) via the passage (106) of the second end piece (120);
- at the first location (4), a first end piece (120) is connected to the gas pipe, the first end piece (120) comprising a housing enclosing a passage (106);
- the free end of the casing tube (100') is passed through the passage (106) of the first end piece (102) in such a manner that the casing tube (100') extends from the outside of the first end piece (102) through the passage (106) of the first end piece to the inside of the gas pipe (2).

10. A method according to claim 8 or 9, wherein, further, at least one information transmission cable (100) is passed through the casing tube (100') so that the information transmission cable extends in the casing tube (100') between the first (102) and the second end piece (120).

11. A method according to any preceding claim, wherein the first and the second fitting (36, 56) form end pieces (102, 120) adapted to provide a gastight sealing with the line.

12. A method according to any preceding claim, wherein the first end piece (102), the second end piece (120), the first fitting (36) and/or the second fitting (56) are connected to the gas pipe in a manner known per se by means of saddles (40, 63) and bladdern (24, 26, 44, 46), without the gas pressure in the gas pipe between the first and the second location falling out.

13. A method according to any one of the preceding claims 1-11, wherein the first end piece (102), the second end piece (120), the first fitting (36) and/or the second fitting (56) are connected in a manner known per se by temporarily compressing the gas pipe, manufactured from polyethylene, at specific locations so as to interrupt the gas flow at said locations.

## Patentansprüche

1. Verfahren zum Einbringen eines flexiblen Kabels (100, 100') in wenigstens ein Gasrohr (2) eines Gasverteilungsnetzes (1), wobei das Gasrohr (2) zur Lieferung von Gas zu Verbrauchern verwendet wird, wobei das Kabel eingebracht wird, ohne. dass die Gasversorgung zu den mit dem Gasverteilungsnetz verbundenen Verbrauchern unterbrochen werden muss, wobei die folgenden Schritte ausgeführt werden:
- 1. An einem ersten Ort (4) des Gasrohrs (2) wird ein Zugkörper (86) in das Gasrohr eingesetzt;
- 2. an dem ersten Ort (4) des Gasrohrs (2) wird ein erstes Anschlussstück (36, 102) mit dem Gasrohr verbunden, wobei das Anschlussstück einen Durchgang (86, 106) aufweist;
- 3. ein Teil des Kabels wird durch den Durchgang des ersten Anschlussstücks (36, 102) in das Gasrohr (2) eingeführt, während ein erstes freies Ende des Kabels mit dem Zugkörper (86) verbunden wird und das Kabel durch den Durchgang (82, 106) vom Inneren des Gasrohrs (2) zum Äußeren des Gasrohrs verläuft; und wobei nach Durchführung der Schritte 1. bis 3.:
- 4. eine Gasdruckdifferenz über die Seiten des Zugkörpers (86) erzeugt wird, so dass der Zugkörper sich infolge der Druckdifferenz zu einem zweiten Ort des Gasrohrs bewegt und demgemäß das Kabel mitzieht, wobei eine Umfangskante (94) des Zugkörpers (86) wenigstens nahezu an der Innenwand des Gasrohrs anliegt.

2. Verfahren nach Anspruch 1, wobei an dem zweiten Ort (8) ein zweites Anschlussstück (56, 120) mit dem Gasrohr verbunden wird, wobei das zweite Anschlussstück (56, 120) ein Gehäuse aufweist, das einen Durchgang (82, 106) umfasst, wobei das freie Ende des Kabels durch den Durchgang (82, 106) des zweiten Anschlussstücks (56, 120) hindurchgeführt wird, so dass das Kabel vom Äußeren des zweiten Anschlussstücks (56, 120) durch den Durchgang (82, 106) des zweiten Anschlussstücks (56, 120) zum Inneren des Gasrohrs (2) verläuft.

3. Verfahren nach Anspruch 1, wobei das Kabel aus einem Informationsübertragungskabel (108) zum Übertragen von Information besteht.

4. verfahren nach Anspruch 1, wobei das Kabel aus einer hohlen, flexiblen Mantelröhre (100') besteht.

5. Verfahren nach Anspruch 1, wobei das Kabel aus einer ersten Zugschnur (84) besteht.

6. Verfahren nach Anspruch 5, wobei ferner:
- an dem zweiten Ort des Gasrohrs ein zweites Anschlussstück (56) mit dem Gasrohr verbunden wird, wobei das zweite Anschlussstück (56) einen Durchgang (82) aufweist;
- durch den Durchgang (82) des zweiten Anschlussstücks (56) ein erstes freies Ende einer zweiten Zugschnur (96) in das Gasrohr eingeführt wird, wobei das erste freie Ende der zweiten Zugschnur (96) mit der ersten Zugschnur (84) verbunden wird und die zweite Zugschnur (96) durch den Durchgang (82) des zweiten Anschlussstücks (56) vom Inneren des Gasrohrs (2) zum Äußeren des Gasrohrs verläuft;
- das erste freie Ende der zweiten Zugschnur (96) mittels der ersten Zugschnur (84) zum ersten Ort (4) gezogen wird, indem die erste Zugschnur (84) am ersten Ort (4) aus dem Gasrohr (2) herausgezogen wird;
- an dem ersten Ort (4) ein erstes Endstück (102) mit dem Gasrohr verbunden wird, wobei das erste Endstück (102) ein Gehäuse aufweist, das einen Durchgang (106) umfasst und durch das das Informationsübertragungskabel (100) in einer solchen Weise hindurchgeführt wird, dass das Informationsübertragungskabel (100) vom Äußeren des ersten Endstücks (102) durch den Durchgang (106) des ersten Endstücks in das Innere des Gasrohrs (2) verläuft;
- ein freies Ende des Informationsübertragungskabels, das innerhalb des Rohrs liegt, mit der zweiten Zugschnur (96) verbunden wird;
- das Informationsübertragungskabel mittels der zweiten Zugschnur (96) durch das Rohr in Richtung des zweiten Orts gezogen wird, indem die zweite Zugschnur (96) an dem zweiten Ort (8) aus dem Gasrohr herausgezogen wird, wobei das Informationsübertragungskabel (100) durch den Durchgang (106) des ersten Endstücks (102) in das Gasrohr gezogen wird;
- an dein zweiten Ort (8) ein zweites Endstück (120) mit dem Gasrohr verbunden wird, wobei das zweite Endstück ein Gehäuse aufweist, das einen Durchgang (106) umfasst;
- das freie Ende des Informationsübertragungskabels (100) durch den Durchgang (106) des zweiten Endstücks (120) in der Weise hindurchgeführt wird, dass das Informationsübertragungskabel vom Äußeren des zweiten Endstücks durch den Durchgang des zweiten Endstücks in das Innere des Gasrohrs verläuft.

7. Verfahren nach Anspruch 5, wobei ferner:
- an dem zweiten Ort (8) ein zweites Endstück (120) mit dem Gasrohr verbunden wird, wobei das zweite Endstück (120) ein Gehäuse aufweist, das einen Durchgang (106) umfasst;
- ein freies Ende des Informationsübertragungskabels (100) durch den Durchgang (106) des zweiten Endstücks (120) so hindurchgeführt wird, dass das Informationsübertragungskabel (100) vom Äußeren des zweiten Endstücks (120) durch den Durchgang (106) des zweiten Endstücks (120) in das Innere des Gasrohrs (2) verläuft;
- das freie Ende des Informationsübertragungskabels (100), das innerhalb des Rohrs liegt, mit der ersten Zugschnur (84) verbunden wird;
- das Informationsübertragungskabel (100) durch das Gasrohr in Richtung des ersten Orts (4) mittels der ersten Zugschnur (84) gezogen wird, indem die erste Zugschnur (84) an dem ersten Ort (4) aus dem Gasrohr herausgezogen wird, wodurch das Informationsübertragungskabel (100) durch den Durchgang (106) des zweiten Endstücks (120) in das Gasrohr gezogen wird;
- an dem ersten Ort (4) ein erstes Endstück (120) mit dem Gasrohr (2) verbunden wird, wobei das erste Endstück ein Gehäuse aufweist, das einen Durchgang (106) umfasst;
- das freie Ende des Informationsübertragungskabels (100) durch den Durchgang (106) des ersten Endstücks (102) in einer solchen Weise hindurchgeführt wird, dass das Informationsübertragungskabel vom Äußeren des ersten Endstücks (102) durch den Durchgang (106) des ersten Endstücks in das Innere des Gasrohrs verläuft.

8. Verfahren nach Anspruch 5, wobei ferner:
- an dem zweiten Ort des Gasrohrs (2) ein zweites Anschlussstück (56) mit dem Gasrohr verbunden wird, wobei das Anschlussstück (56) einen Durchgang (82) aufweist;
- ein erstes freies Ende einer zweiten Zugschnur (96) durch den Durchgang (82) des zweiten Anschlussstücks (56) in das Gasrohr (2) eingeführt wird, wobei das erste freie Ende der zweiten Zugschnur (96) mit der ersten Zugschnur (84) verbunden wird und die zweite Zugschnur (96) durch den Durchgang (82) des zweiten Anschlussstücks (56) aus dem Inneren des Gasrohrs zum Äußeren des Gasrohrs verläuft;
- das erste freie Ende der zweiten Zugschnur (96) mittels der ersten Zugschnur (84) zum ersten Ort (4) gezogen wird, indem die erste Zugschnur (84) am ersten Ort (4) aus dem Gasrohr (2) herausgezogen wird;
- ein erstes Endstück (102) am ersten Ort (4) mit dem Gasrohr verbunden wird, wobei das erste Endstück (102) ein Gehäuse aufweist, das einen Durchgang (106) umfasst und durch das eine flexible, hohle Mantelröhre (100') in der Weise hindurchgeführt wird, dass die Mantelrohre (100') vom Äußeren des ersten Endstücks (102) durch den Durchgang (106) des ersten Endstücks in das Innere des Gasrohrs (2) verläuft;
- ein freies Ende der Mantelröhre (100'), das in dem Rohr liegt, mit der zweiten Zugschnur (96) verbunden wird;
- die Mantelröhre (100') mittels der zweiten Zugschnur (96) durch das Gasrohr (2) in Richtung des zweiten Orts gezogen wird, indem die zweite Zugschnur (96) an dem zweiten Ort aus dem Gasrohr herausgezogen wird, wobei die Mantelröhre (100') durch den Durchgang (106) des ersten Endstücks (102) in das Gasrohr (2) gezogen wird;
- ein zweites Endstück (120) an dem zweiten Ort (8) mit dem Gasrohr verbunden wird, wobei das zweite Endstück (120) ein Gehäuse aufweist, das einen Durchgang (106) umfasst;
- das freie Ende der Mantelröhre (100') durch den Durchgang (106) des zweiten Endstücks (120) in der Weise hindurchgeführt wird, dass die Mantelröhre (100') vom Äußeren des zweiten Endstücks (120) durch den Durchgang (106) des zweiten Endstücks (120) in das Innere des Gasrohrs (2) verläuft.

9. Verfahren nach Anspruch 5, wobei ferner:
- ein zweites Endstück (120) an dem zweiten Ort (8) mit dem Gasrohr verbunden wird, wobei das zweite Endstück (120) ein Gehäuse aufweist, das einen Durchgang (106) umfasst;
- ein freies Ende einer Mantelröhre (100') durch den Durchgang des zweiten Endstücks in der Weise hindurchgeführt wird, dass die Mantelröhre (100') vom Äußeren des zweiten Endstücks (120) durch den Durchgang (106) des zweiten Endstücks in das Innere des Gasrohrs (2) verläuft;
- das freie Ende des Mantelrohrs (100'), das in dem Rohr liegt, mit der ersten Zugschnur (84) verbunden wird;
- die Mantelröhre (100') mittels der zweiten Zugschnur (84) durch das Gasrohr in die Richtung des ersten Orts (4) gezogen wird, indem die erste Zugschnur (84) aus dem Gasrohr (2) an dem ersten Ort (4) herausgezogen wird, wodurch die Mantelröhre (100') durch den Durchgang (106) des zweiten Endstücks (120) in das Gasrohr (2) gezogen wird;
- ein erstes Endstück (120) an dem ersten Ort (4) mit dem Gasrohr verbunden wird, wobei das erste Endstück (120) ein Gehäuse aufweist, das einen Durchgang (106) umfasst;
- das freie Ende der Mantelröhre (100') durch den Durchgang (106) des ersten Endstücks (102) in der Weise hindurchgeführt wird, dass die Mantelröhre (100') vom Äußeren des ersten Endstücks (102) durch den Durchgang (106) des ersten Endstücks in das Innere des Gasrohrs (2) verläuft.

10. Verfahren nach Anspruch 8 oder 9, wobei ferner wenigstens ein Informationsübertragungskabel (100) durch die Mantelröhre (100') hindurchgeführt wird, so dass das Informationsübertragungskabel in der Mantelröhre (100') zwischen dem ersten (102) und dem zweiten Endstück (120) verläuft.

11. Verfahren nach einem der vorhergehenden Ansprüche, wobei das erste und das zweite Anschlussstück (36, 56) Endstücke (102, 120) bilden, die dazu ausgebildet sind, um eine gasdichte Abdichtung mit dem Kabel zu schaffen.

12. Verfahren nach einem der vorhergehenden Ansprüche, wobei das erste Endstück (102), das zweite Endstück (120), das erste Anschlussstück (36) und/oder das zweite Anschlussstück (56) in einer an sich bekannten Weise durch Schellen (40, 63) und Blasen (24, 26, 44, 46) mit dem Gasrohr verbunden werden, ohne dass der Gasdruck in dem Gasrohr zwischen dem ersten und dem zweiten Ort abfällt.

13. Verfahren nach einem der vorhergehenden Ansprüche 1 bis 11, wobei das erste Endstück (102), das zweite Endstück (120), das erste Anschlussstück (36) und/oder das zweite Anschlussstück (56) in einer an sich bekannten Weise mit dem Gasrohr verbunden werden, indem das Gasrohr, das aus Polyethylen hergestellt ist, an speziellen Orten zeitweise zusammengedrückt wird, um so den Gasfluss zwischen den Orten zu unterbrechen.

## Revendications

1. Procédé pour installer une ligne souple (100, 100') dans au moins un tuyau de gaz (2) d'un réseau (1) de distribution de gaz, ledit tuyau de gaz (2) étant utilisé pour fournir du gaz à des utilisateurs, la ligne étant installée sans que les utilisateurs connectés au réseau de distribution de gaz n'aient à être coupés de leur alimentation en gaz, dans lequel on exécute les étapes suivantes :
- 1. en un premier emplacement (4) du tuyau de gaz (2), on insère un corps de traction (86) dans le tuyau de gaz;
- 2. au niveau du premier emplacement (4) du tuyau de gaz (2), on connecte une première garniture (36, 102) au tuyau de gaz, la première garniture comprenant un passage (86, 106);
- 3. on insère une partie de la ligne dans le tuyau de gaz (2) via le passage de la première garniture (36, 102), tandis que l'on connecte une première extrémité libre de la ligne au corps de traction (86) et que la ligne s'étend, via le passage (82, 106), de l'intérieur du tuyau de gaz (2) à l'extérieur du tuyau de gaz; puis, après avoir exécuté les étapes 1 à 3.
- 4. on crée une différence de pression de gaz de chaque côté du corps de traction (86), de sorte qu'en conséquence de la différence de pression, le corps de traction se déplace jusqu'à un deuxième emplacement du tuyau de gaz et, en conséquence, entraîne la ligne, un bord périphérique (94) au moins du corps de traction (86) étant au moins presque en appui contre la paroi interne du tuyau de gaz.

2. Procédé selon la revendication 1, dans lequel au niveau du deuxième emplacement (8), on connecte une deuxième garniture (56, 120) au tuyau de gaz, la deuxième garniture (56, 120) comprenant un boîtier qui enserre un passage (82, 106), l'extrémité libre de la ligne étant insérée à travers le passage (82, 106) de la deuxième garniture (56, 120) si bien que la ligne s'étend de l'extérieur de la deuxième garniture (56, 120), à travers le passage (82, 106) de la deuxième garniture (56, 120), vers l'intérieur du tuyau de gaz (2).

3. Procédé selon la revendication 1, dans lequel la ligne consiste en un câble (108) de transmission d'informations destiné à transmettre des informations.

4. Procédé selon la revendication 1, dans lequel la ligne consiste en un tube de gainage souple et creux (100').

5. Procédé selon la revendication 1, dans lequel la ligne consiste en un premier cordon de traction (84).

6. Procédé selon la revendication 5, dans lequel, en outre :
- au niveau du deuxième emplacement du tuyau de gaz, on connecte une deuxième garniture (56) au tuyau de gaz, la deuxième garniture (56) comprenant un passage (82);
- on insère, via le passage (82) de la deuxième garniture (56), une première extrémité libre d'un deuxième cordon de traction (96) dans le tuyau de gaz, la première extrémité libre du deuxième cordon de traction (96) étant connectée au premier cordon de traction (84) et le deuxième cordon de traction (96) s'étendant, via le passage (82) de la deuxième garniture (56), de l'intérieur du tuyau de gaz (2) à l'extérieur du tuyau de gaz;
- on lire ladite première extrémité libre du deuxième cordon de traction (96) jusqu'au premier emplacement (4) à l'aide du premier cordon de traction (84), en tirant le premier cordon de traction (84) hors du tuyau de gaz (2) au niveau du premier emplacement (4);
- on connecte un premier embout (102) au tuyau de gaz, au niveau du premier emplacement (4), le premier embout (102) comprenant un boîtier qui enserre un passage (106) et à travers lequel on fait passer le câble (100) de transmission d'informations de telle manière que le câble (100) de transmission d'informations s'étend de l'extérieur du premier embout (102), à travers le passage (106) du premier embout, jusqu'à l'intérieur du tuyau de gaz (2);
- on connecte une extrémité libre du câble de transmission d'informations située à l'intérieur du tuyau de gaz au deuxième cordon de traction (96);
- on tire le câble de transmission d'informations dans le tuyau de gaz à l'aide du deuxième cordon de traction (96) en direction du deuxième emplacement (8), en tirant le deuxième cordon de traction (96) hors du tuyau de gaz au niveau du deuxième emplacement (8), le câble (100) de transmission d'informations étant tiré, via le passage (106) du premier embout (102), dans le tuyau de gaz;
- au niveau du deuxième emplacement (8), on connecte un deuxième embout (120) au tuyau de gaz, le deuxième embout comprenant un boîtier enserrant un passage (106);
- on fait passer l'extrémité libre du câble (100) de transmission d'informations à travers le passage (106) du deuxième embout (120) de telle manière que le câble de transmission d'informations s'étend de l'extérieur du deuxième embout, à travers le passage du deuxième embout, jusqu'à l'intérieur du tuyau de gaz.

7. Procédé selon la revendication 5, dans lequel, en outre :
- au niveau du deuxième emplacement (8), on connecte un deuxième embout (120) au tuyau de gaz, le deuxième embout (120) comprenant un boîtier qui enserre un passage (106);
- on fait passer une extrémité libre du câble (100) de transmission d'informations à travers le passage (106) du deuxième embout (120) de telle manière que le câble de transmission d'informations (100) s'étend de l'extérieur du deuxième embout (120), à travers le passage (106) du deuxième embout (120), jusqu'à l'intérieur du tuyau de gaz (2);
- on connecte l'extrémité libre du câble (100) de transmission d'informations située à l'intérieur du tuyau au premier cordon de traction (84);
- on tire le câble (100) de transmission d'informations dans le tuyau de gaz à l'aide du premier cordon de traction (84) en direction du premier emplacement (4), en tirant le premier cordon de traction (84) hors du tuyau de gaz au niveau du premier emplacement (4), le câble (100) de transmission d'informations étant tiré via le passage (106) du deuxième embout (120), dans le tuyau de gaz;
- au niveau du premier emplacement (4), on connecte un premier embout (120) au tuyau de gaz (2), le premier embout comprenant un boîtier enserrant un passage (106);
- on fait passer l'extrémité libre du câble (100) de transmission d'informations à travers le passage (106) du premier embout (102) de telle manière que le câble de transmission d'informations s'étend de l'extérieur du premier embout (102), à travers le passage du premier embout, jusqu'à l'intérieur du tuyau de gaz.

8. Procédé selon la revendication 5, dans lequel, en outre :
- au niveau du deuxième emplacement (8) du tuyau de gaz (2), on connecte une deuxième garniture (56) au tuyau de gaz, la deuxième garniture (56) comprenant un passage (82);
- on insère, via le passage (82) de la deuxième garniture (56), une première extrémité libre d'un deuxième cordon de traction (96) dans le tuyau de gaz (2), la première extrémité libre du deuxième cordon de traction (96) étant connectée au premier cordon de traction (84) et le deuxième cordon de traction (96) s'étendant, via le passage (82) de la deuxième garniture (56), de l'intérieur du tuyau de gaz à l'extérieur du tuyau de gaz;
- - on tire ladite première extrémité libre du deuxième cordon de traction (96) jusqu'au premier emplacement (4) à l'aide du premier cordon de traction (84), en tirant le premier cordon de traction (84) hors du tuyau de gaz (2) au niveau du premier emplacement (4);
- on connecte un premier embout (102) au tuyau de gaz, au niveau du premier emplacement (4), le premier embout (102) comprenant un boîtier qui enserre un passage (106) et à travers lequel on fait passer un tube de gainage souple et creux (100') de telle manière que le tube de gainage (100') s'étend de l'extérieur du premier embout (102), à travers le passage (106) du premier embout, jusqu'à l'intérieur du tuyau de gaz (2);
- on connecte une extrémité libre du tube de gainage (100') située à l'intérieur du tuyau de gaz au deuxième cordon de traction (96);
- on tire le tube de gainage (100') dans le tuyau de gaz (2) à l'aide du deuxième cordon de traction (96) en direction du deuxième emplacement (8), en tirant le deuxième cordon de traction (96) hors du tuyau de gaz au niveau du deuxième emplacement, le tube de gainage (100') étant tiré, via le passage (106) du premier embout (102), dans le tuyau de gaz (2);
- au niveau du deuxième emplacement (8), on connecte un deuxième embout (120) au tuyau de gaz, le deuxième embout comprenant un boîtier enserrant un passage (106);
- on fait passer l'extrémité libre du tube de gainage (100') à travers le passage (106) du deuxième embout (120) de telle manière que le tube de gainage (100') s'étend de l'extérieur du deuxième embout (120), à travers le passage (106) du deuxième embout (120), jusqu'à l'intérieur du tuyau de gaz (2).

9. Procédé selon la revendication 5, dans lequel, en outre :
- au niveau du deuxième emplacement (8), on connecte un deuxième embout (120) au tuyau de gaz, le deuxième embout (120) comprenant un boîtier qui enserre un passage (106);
- on fait passer une extrémité libre d'un tube de gainage (100') à travers le passage du deuxième embout de telle manière que le tube de gainage (100') s'étend de l'extérieur du deuxième embout (120),-à travers le passage (106) du deuxième embout, jusqu'à l'intérieur du tuyau de gaz (2);
- on connecte l'extrémité libre du tube de gainage (100') située à l'intérieur du tuyau au premier cordon de traction (84);
- on tire le tube de gainage (100') dans le tuyau de gaz à l'aide du premier cordon de traction (84) en direction du premier emplacement (4), en tirant le premier cordon de traction (84) hors du tuyau de gaz (2) au niveau du premier emplacement (4), le tube de gainage (100') étant tiré, via le passage (106) du deuxième embout (120), dans le tuyau de gaz (2);
- au niveau du premier emplacement (4), on connecte un premier embout (120) au tuyau de gaz, le premier embout (120) comprenant un boîtier enserrant un passage (106);
- on fait passer l'extrémité libre du tube de gainage (100') à travers le passage (106) du premier embout (102) de telle manière que le tube de gainage (100') s'étend de l'extérieur du premier embout (102), à travers le passage (106) du premier embout, jusqu'à l'intérieur du tuyau de gaz (2).

10. Procédé selon la revendication 8 ou 9, dans lequel, en outre, on fait passer au moins un câble (100) de transmission d'informations dans le tube de gainage (100') de sorte que le câble de transmission d'informations s'étend dans le tube de gainage (100') entre le premier embout (102) et le deuxième embout (120).

11. Procédé selon l'une quelconque des revendications précédentes, dans lequel les première et deuxième garnitures (36, 56) forment des embouts (102, 120) adaptés pour assurer un scellement étanche aux gaz avec la ligne.

12. Procédé selon l'une quelconque des revendications précédentes, dans lequel le premier embout (102), le deuxième embout (120), la première garniture (36) et/ou la deuxième garniture (56) sont connectées au tuyau de gaz d'une manière connue en soi à l'aide de supports (40, 63) et de poches gonflables (24, 26, 44, 46), sans diminution de la pression de gaz dans le tuyau de gaz entre le premier et le deuxième emplacements.

13. Procédé selon l'une quelconque des revendications 1 à 11, dans lequel le premier embout (102), le deuxième embout (120), la première garniture (36) et/ou la deuxième garniture (56) sont connectées d'une manière connue en soi en comprimant temporairement le tuyau de gaz, fabriqué en polyéthylène, en des emplacements spécifiques, afin d'interrompre l'écoulement de gaz au niveau desdits emplacements.
